# FASCICULE DE BREVET EUROPEEN

(11) **EP 0 486 348 B1**
(45) Date de publication et mention de la délivrance du brevet: **24.05.1995**
(21) Numéro de dépôt: 91402856.8
(22) Date de dépôt: 25.10.1991
(51) Int. Cl.: F16J 15/40, F04D 29/10

(54) **Cartouche d'étanchéité avec roues de décharge**
Dichtungskartusche mit Ausgleichsrädern
Sealing cartridge with relief wheels

(30) Priorité: 31.10.1990 FR 9014089
(43) Date de publication de la demande: 20.05.1992
(73) Titulaire: ETABLISSEMENTS F. MORET (S.A.), F-02100 Saint-Quentin (FR)
(72) Inventeur: Georges Michel, Savy, F-02590 Etreillers (FR)
(74) Mandataire: Hénnion, Jean-Claude

(56) Documents cités:
- FR-A- 884 624
- FR-A- 2 151 590
- US-A- 1 329 548

## Description

La présente invention concerne un système d'étanchéité pour pompe centrifuge, du type comportant des roues de décharge auxiliaires. Elle concerne plus particulièrement un tel système se présentant sous la forme d'une cartouche adaptable sur l'arbre de la pompe en remplacement des systèmes existants, a tresses ou à garnitures mécaniques.

Une pompe centrifuge est une pompe avec un corps de pompe délimitant un espace intérieur dans lequel est placé un impulseur entraîné en rotation autour d'un axe par un arbre ; l'impulseur comporte sur sa face avant, c'est-à-dire celle qui est tournée vers l'aspiration du produit à pomper, des aubes qui canalisent ledit produit vers la périphérie de l'impulseur et vers une canalisation de refoulement.

Parmi les systèmes d'étanchéité pour pompe centrifuge les plus utilisées sont les tresses, les garnitures mécaniques et les roues de décharge. Le système à tresses nécessite un arrosage d'eau claire, ce qui constitue un inconvénient important dans la mesure où il est parfois incompatible avec le type de produit pompé et où il est une contrainte d'utilisation. Le système à garnitures mécaniques n'est pas totalement fiable lorsque les produits pompés sont très abrasifs ; il s'agit d'un système coûteux dont la durée de vie est limitée et dont la mise en oeuvre est délicate.

On a proposé récemment un nouveau système d'étanchéité, dit à roues de décharge, basé sur l'atténuation de la pression régnant derrière la roue de la pompe, roue qui sera dénommée impulseur dans la suite du présent texte. Cette atténuation de pression est obtenue en plaçant des ailettes de décharge sur l'arrière de l'impulseur jusqu'à obtention d'un équilibre avec la pression atmosphérique. Ces ailettes garnissent la face arrière de l'impulseur lui-même et de deux roues de décharge qui fonctionnent en série dans deux chambres indépendantes. Un tel système est décrit par exemple dans le mensuel CHIMIE MAGAZINE de décembre 1989 pages 157 et 158, et dans le document FR.A.2.151.590.

Ses avantages sont indéniables : aucun risque de dilution ou de contamination du produit pompé, aucune précaution particulière pour l'utilisateur, très longue durée de vie. Cependant dans son état actuel ce système d'étanchéité avec roues de décharge présente des inconvénients. En premier lieu , il fait partie intégrante de la pompe, dont la construction doit être conçue en conséquence ou bien , comme dans le document FR.A.2.151.590, il doit être fixé sur la carcasse de la pompe. En second lieu, il consomme relativement plus d'énergie que les autres systèmes d'étanchéité.

C'est l'objet de l'invention que de proposer un système d'étanchéité pour pompe centrifuge qui pallie ces inconvénients. Le système, de manière connue , comporte des roues de décharge auxiliaires. Selon l'invention, les roues de décharge tournant dans des chambres de décharge, lesdites roues et lesdites chambres sont comprises dans une cartouche interchangeable qui est montée dans un logement pratiqué dans la partie arrière du corps de pompe. De plus la cartouche interchangeable comporte un élément solidaire des roues de décharge auxiliaires, adaptable sur l'arbre et assorti d'un moyen de solidarisation avec l'arbre de la pompe.

Ainsi il n'est plus indispensable d'équiper la pompe d'origine avec le système d'étanchéité ni de le fixer sur la carcasse de la pompe ; la cartouche selon l'invention peut même se substituer aux autres systèmes existants, du type à tresses ou à garnitures mécaniques.

Avantageusement la cartouche selon l'invention comporte au moins quatre et de préférence six roues de décharge auxiliaires de diamètre très inférieur à celui de l'impulseur.

Le faible diamètre des roues de décharge permet de diminuer la puissance consommée par la rotation desdites roues.

La cartouche selon l'invention comporte par exemple :
a. une chemise intérieure cylindrique, qui fait office d'élément solidaire des roues de décharge ;
b. n roues de décharge auxiliaire , solidaires radialement de la chemise intérieure;
c. un boîtier cylindrique extérieur , ouvert à sa première extrémité destinée à faire face à l'arrière de l'impulseur, et fermé à sa seconde extrémité de manière étanche sur la chemise intérieure ;
d. (n - 1) flasques de séparation , fixés à l'intérieur du boîtier, chaque flasque étant placé dans l'intervalle entre deux roues de décharge auxiliaires successives de manière à former une chambre indépendante.

De préférence la chemise intérieure comporte un épaulement vers sa seconde extrémité, formant butée pour les roues à ailettes montées par vissage sur ladite chemise.

De préférence chaque flasque de séparation comporte une partie radiale faisant office de cloison de séparation entre deux roues successives et une partie longitudinale de forme annulaire, dont les bords avant et arrière font office de surface d'appui lors du montage de la cartouche.

Le bord avant de la partie longitudinale du premier flasque de séparation prend appui sur la face intérieure de l'extrémité fermée du boîtier, et le bord arrière de la partie longitudinale du dernier flasque de séparation prend appui sur un épaulement interne du boîtier vers l'extrémité ouverte de celui-ci.

Le moyen de solidarisation de la chemise sur l'arbre de la pompe consiste par exemple en une clavette, apte à être placée dans un logement consistant en deux évidements pratiqués en regard l'un de l'autre dans la chemise et dans l'arbre.

D'autres avantages et caractéristiques de l'invention apparaîtront plus clairement à la lecture de la description du mode préféré de réalisation d'une cartouche d'étanchéité pour pompe centrifuge à six roues auxiliaires de décharge, illustré par le dessin annexé dans lequel :
La figure 1 est une vue en coupe longitudinale de la cartouche,
La figure 2 est une vue en coupe longitudinale d'une pompe centrifuge équipée d'une cartouche.
La figure 3 est une vue en coupe longitudinale d'une cartouche selon la figure 1 équipée d'un autre système d'étanchéité.

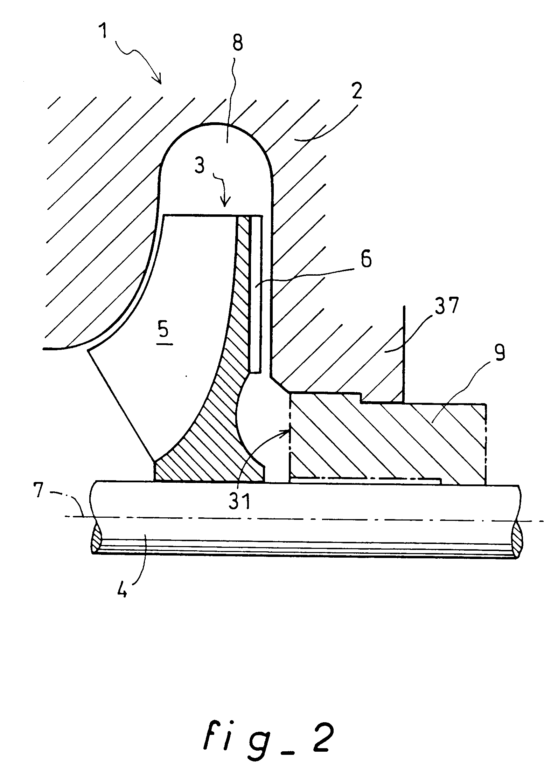

La pompe 1 montrée sur la figure 2 est une pompe centrifuge traditionnelle, avec un corps de pompe 2 délimitant un espace intérieur dans lequel est placé l'impulseur 3, entraîné en rotation autour de l'axe 7 par l'arbre 4. L'impulseur 3 comporte sur sa face avant, c'est-à-dire celle qui est tournée vers l'aspiration du produit à pomper, des aubes 5 qui canalisent ledit produit vers la périphérie de l'impulseur 3 et vers la canalisation de refoulement 8. L'impulseur 3 comporte sur sa face arrière des ailettes de décharge 6 dont le rôle est de diminuer la pression régnant dans la zone arrière de l'impulseur 3, délimitée par le corps de pompe 2.

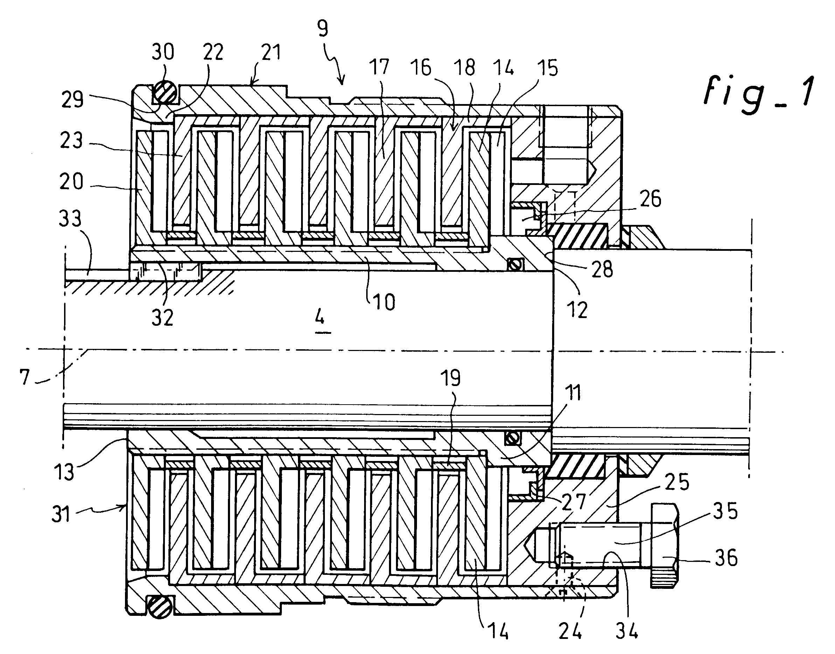

Une cartouche d'étanchéité 9 entoure l'arbre 4, dans la zone arrière de l'impulseur 3. Elle est placée dans un logement pratiqué, autour de l'arbre 4, dans la partie arrière 37 du corps de pompe 2. Il peut s'agir d'une cartouche contenant des tresses ou des garnitures mécaniques traditionnelles. Selon l'invention la cartouche 9 contient six roues auxiliaires de décharge. Le détail de la cartouche 9 est représenté sur la figure 1.

La cartouche 9 a la même configuration extérieure qu'une cartouche qui contiendrait des garnitures mécaniques ou des tresses. Elle est de dimensions suffisamment réduites pour s'adapter sur les pompes existantes, en remplacement des cartouches traditionnelles.

Pour mieux comprendre les avantages procurés par le mode préféré de réalisation de la cartouche 9 selon l'invention, la description ci-après se fera dans l'ordre de montage des différents éléments pour constituer la cartouche.

La chemise 10 est l'élément qui est destiné à être placé immédiatement autour de l'arbre 4 de la pompe 1. Il s'agit d'un cylindre métallique creux dont l'évidement central est d'un diamètre légèrement supérieur à celui de l'arbre 4 et qui présente vers une de ses extrémités 12 un épaulement 11. Pour faciliter le montage et l'extraction , un évidement central peut localement exister.

La surface extérieure de la chemise 10 est filetée entre l'épaulement 11 et son autre extrémité 13.

On introduit par vissage sur la chemise 10 une première roue 14 jusqu'à l'épaulement 11 qui fait office de butée pour ladite roue 14. Cette roue 14 est équipée d'ailettes 15 sur la face dirigée vers l'épaulement 11. La configuration des ailettes 15 est telle que lesdites ailettes , n'occupant pas toute la surface de la roue 14 , débordent au-dessus de l'épaulement 11.

On place ensuite derrière la première roue 14, en la faisant coulisser le long de la chemise 10 , une première flasque 16 , qui est une pièce coudée, ayant une partie radiale 17 et une partie longitudinale 18, cette dernière débordant au-dessus et au-delà de la roue 14 et des ailettes 15, lorsque le flasque 16 est centré sur l'axe 7 de l'arbre 4.

Une pièce annulaire 19 est glissée sur la chemise 10 sous le flasque 16 entre la face arrière de la roue 14. Cette pièce 19 forme entretoise entre deux roues successives.

Les mêmes opérations sont répétées quatre fois , à savoir placement d'une roue 14, d'un flasque puis d'une entretoise 19. Enfin on garnit la face extérieure de la chemise 10 en vissant une dernière roue 20.

La chemise 10 ainsi garnie de ses six roues à ailettes est introduite dans un boîtier cylindrique 21 dont l'évidement intérieur présente un épaulement 22 à l'une de ses extrémités. Comme cela découle de l'examen de la figure 1, le diamètre de l'évidement intérieur du boîtier 21 est tel , et l'introduction de la chemise 10 garnie des roues de décharge 14 et des flasques de séparation 16 se fait de telle sorte que le dernier flasque 23 placé sur la chemise 10 vient en butée sur l'épaulement 22 intérieur du boîtier 21 tandis que la dernière roue de décharge 20 se trouve sous ledit épaulement 22.

L'autre extrémité du boîtier 21, opposée à l'épaulement 22, est fermée par introduction dans le boîtier 21 et fixation par exemple au moyen de vis 24 d'une bague annulaire 25 prenant appui sur la partie longitudinale 18 du premier flasque 14.

La bague 25 comporte, en regard et à la hauteur de l'épaulement 11 de la chemise 10, un évidement annulaire 26 qui sert de logement pour un joint à lèvres 27.

Les flasques 16 sont parfaitement positionnés à l'intérieur du boîtier 21 : leurs parties longitudinales 18 affleurent la face intérieure du boîtier 21, leurs parties radiales 17 sont placées entre deux roues de décharge 14 successives. La rangée de flasques 16 est bloquée en position à deux extrémités par les butées formées d'une part par l'épaulement intérieur 22 du boîtier 21 et d'autre part par la bague de fermeture 25.

La bague de fermeture 25 présente un évidement cylindrique intérieur dont le diamètre est supérieur à celui de l'évidement central de la chemise 10. Cette différence de diamètre forme un décrochement qui, lors du placement de la cartouche 9 de l'invention , coopère avec l'épaulement 28 existant sur l'arbre 4. Ainsi la face avant 12 de la chemise 10 vient en butée contre l'épaulement 28 de l'arbre 4.

Les dimensions de la cartouche 9 sont choisies en fonction de la position de cet épaulement 28 sur l'arbre 4 et de la configuration de la partie arrière 37 du corps 2 de la pompe 1.

Sur la périphérie du boîtier 21 est placé, dans un logement 29 , un joint torique 30, pour assurer l'étanchéité avec le corps 2 de pompe.

La chemise 10 comporte à l'extrémité 13, opposée à l'épaulement 12, une rainure 32 qui, lors du placement de la cartouche sur l'arbre 4, est placée face à une encoche 33 pratiquée dans l'arbre 4. La solidarisation de la cartouche 9 et de l'arbre 4 est obtenue par l'introduction d'une clavette dans l'espace formé par la rainure 32 et l'encoche 33.

La cartouche étant placée sur l'arbre 4, son fonctionnement est le suivant. Le liquide pompé est entraîné par la rotation de l'impulseur 3 à travers les aubes 5 vers la canalisation de refoulement 8 et partiellement vers la zone arrière de l'impulseur 3. Le liquide entraîné vers cette zone arrière passe d'abord entre les ailettes 6 arrière de l'impulseur 3, puis dans la cartouche 9 par l'extrémité ouverte 31 du boîtier 21.

La chemise 10 de la cartouche 9 étant solidaire de l'arbre 4 grâce à la clavette, la rotation de l'arbre 4 entraîne en rotation toutes les roues de décharge 16.

Le liquide provenant de la zone arrière de l'impulseur 3 est tout d'abord centrifugé par la première roue 20 de la cartouche (qui est en fait la roue appelée dernière lors du montage de la cartouche). Cette roue assure une fonction de filtration dans la mesure où , du fait de cette centrifugation, les particules solides en dispersion dans le liquide sont projetées vers l'extérieur et ont moins de facilité à pénétrer dans la cartouche 9.

Le liquide pénètre ensuite dans les différentes chambres de décharge délimitées entre les flasques 16. L'action des ailettes 15 de décharge tend à diminuer la pression d'une chambre à l'autre jusqu'à atteindre l'équilibre avec la pression atmosphérique. La zone d'équilibre fluctue avec le point de fonctionnement de la pompe sur sa courbe.

Ainsi en fonctionnement le liquide n'atteint pas le fond de la cartouche 9, mais ne remplit que par exemple les quatre premières chambres en fonction des conditions opératoires. Le joint à lèvres 26 n'est utile que pour assurer l'étanchéité lors de l'arrêt de la pompe.

A titre d'exemple, pour un arbre de 42 mm, on a installé une cartouche comportant six roues de décharge 16 de 104mm ; la décharge obtenue à une vitesse de rotation de l'arbre 4 de 1450tours/mn est de l'ordre du bar. La puissance absorbée maximale par la cartouche est de l'ordre de 600 W, dans le cas où les six chambres de décharge sont remplies de liquide. Comparativement la puissance absorbée par les systèmes traditionnels d'étanchéité est de plusieurs kilowatts. Comme on l'a expliqué précédemment cette diminution de la puissance est due à la mise en oeuvre de roues de décharge ayant un diamètre plus réduit. Un autre avantage réside dans une usure moindre du fait de la vitesse périphérique plus faible du liquide et du fait du rôle de filtre de la première roue 20.

La cartouche 9 peut aussi être équipée d'un système facilitant son démontage. Il peut être difficile d'enlever de l'arbre 4 une cartouche installée depuis un certain temps. Aussi on a prévu dans la bague 25 de fermeture du boîtier 21 deux trous taraudés 34 dans lesquels sont vissées deux vis 35. Lors du placement de la cartouche , la tête 36 de la vis 35 doit affleurer la joue avant du palier de la pompe : lors du démontage on dévisse la vis 35 en sorte que la tête 36 prenne appui sur la joue avant du palier et, par force, entraîne un léger déplacement longitudinal de la cartouche 9 par rapport à l'arbre 4, facilitant ainsi la désolidarisation de l'un par rapport à l'autre.

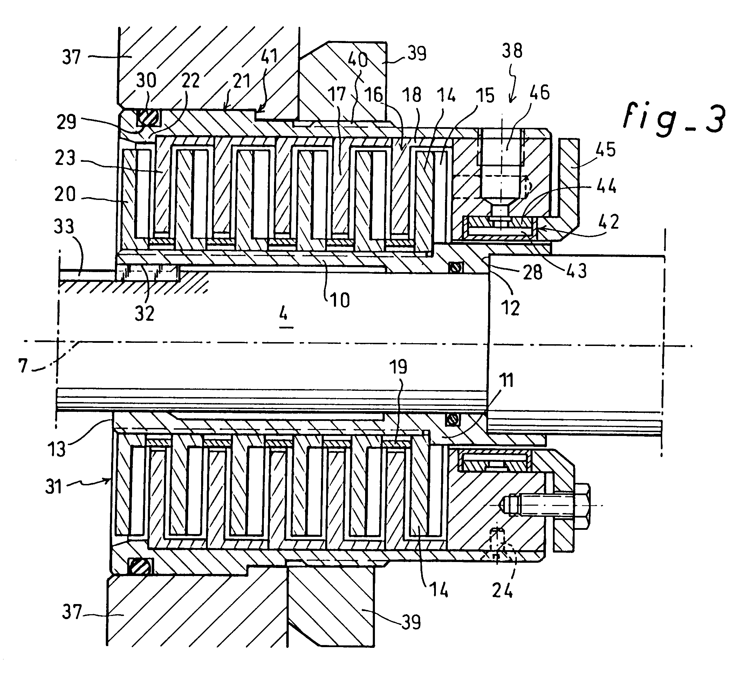

Sur la figure 3 on a représenté une cartouche 38 qui est adaptée sur la partie arrière 37 du corps de pompe et immobilisée par raport à celle-ci par un écrou 39 vissé sur une partie filetée 40 du boîtier cylindrique extérieur (21), au-delà de l'épaulement 41, ledit épaulement 41 du boîtier 21 venant en butée contre un décrochement du logement de la cartouche et assurant le blocage en position de la cartouche 38 lorsqu'on l'introduit dans son logement par la zone arrière de l'impulseur.

La cartouche 38 ne diffère de la cartouche 9 que par le système assurant l'étanchéité entre le boîtier cylindrique extérieur 21 et la chemise 10 lors de l'arrêt de la pompe 1. Dans ce cas, le joint à lèvres 26 est remplacé par un système à membrane qui comprend une membrane 42, montée dans un évidement annulaire 43 à l'aide d'une bague lanterne 44; l'évidement 43 est fermé latéralement et l'ensemble membrane 42/bague lanterne 44 est immobilisé par une plaque de fermeture 45. L'évidement annulaire 43 est raccordé par un orifice 46 d'alimentation à une source de fluide.

Dès l'arrêt en rotation de la pompe, la source de fluide envoie du fluide, eau ou air comprimé, par l'orifice 46; le fluide pénètre dans l'évidement 43, de sorte que la membrane 42 se déforme, sous l'effet de la pression, et s'applique contre la surface de la chemise 10 en regard de l'évidement 43. Ainsi le jeu existant, visible sur la figure 3, entre la membrane 42 et la chemise 10 se trouve éliminé et il n'y a plus de fuite possible du liquide pompé vers l'extérieur.

L'invention n'est pas limitée au mode de réalisation qui a été décrit à titre d'exemple non exhaustif. En particulier il revient à l'homme du métier de déterminer , au cas par cas, les configurations et dimensions de la cartouche 9 en fonction du type de pompe, et donc le nombre de roues de décharge.

## Revendications

1. Système d'étanchéité comportant des roues de décharge auxiliaires et destiné à une pompe centrifuge avec un corps de pompe (2) délimitant un espace intérieur dans lequel est placé un impulseur (3) entraîné en rotation autour d'un axe (7) par un arbre (4), ledit impulseur (3) comportant sur sa face avant, c'est-à-dire celle qui est tournée vers l'aspiration du produit à pomper , des aubes (5) qui canalisent ledit produit vers la périphérie de l'impulseur (3) et vers une canalisation de refoulement (8) caractérisé en ce que, les roues de décharge (14) tournant dans des chambres de décharge, lesdites roues et lesdites chambres sont comprises dans une cartouche (9) interchangeable qui est montée dans un logement pratiqué dans la partie arrière (37) du corps de pompe (2) et en ce que ladite cartouche interchangeable comporte un élément (10) solidaire des roues de décharge auxiliaires (14), adaptable sur l'arbre et assorti d'un moyen de solidarisation avec l'arbre (4) de la pompe.

2. Système selon la revendication 1 caractérisé en ce qu'il comporte au moins quatre et de préférence six roues de décharge (14) auxiliaires de diamètre très inférieur à celui de l'impulseur.

3. Système selon l'une des revendications 1 ou 2 caractérisé en ce que l'élément solidaire des roues de décharge auxiliaires (14) consiste en une chemise intérieure cylindrique (10) et en ce que ledit système comporte :
a. n roues de décharge auxiliaires (14) solidaires radialement de la chemise intérieure (10);
b. un boîtier cylindrique extérieur (21), ouvert à sa première extrémité destinée à faire face à l'arrière de l'impulseur (3), et fermé à sa seconde extrémité de manière étanche sur la chemise intérieure (10);
c. n - 1 flasques de séparation (16) , fixées à l'intérieur du boîtier, chaque flasque étant placé dans l'intervalle entre deux roues de décharge auxiliaires (14) successives de manière à former une chambre indépendante.

4. Système selon la revendication 3 caractérisé en ce que la chemise intérieure (10) comporte un épaulement (11) vers sa seconde extrémité (12), formant butée pour les roues de décharge auxiliaires (14) montées par vissage sur ladite chemise (10).

5. Système selon la revendication 3 caractérisé en ce que chaque flasque de séparation (16) comporte une partie radiale (17) faisant office de cloison de séparation entre deux roues successives (14) et une partie longitudinale (18) de forme annulaire, dont les bords avant et arrière font office de surface d'appui lors du montage de la cartouche (9).

6. Système selon l'une des revendications 1 ou 3 caractérisé en ce que le moyen de solidarisation sur l'arbre de la pompe consiste en une clavette, apte à être placée dans un logement consistant en deux évidements (32,33) pratiqués en regard l'un de l'autre dans l'élément solidaire (10) des roues de décharges auxiliaires (14) et dans l'arbre (4).

7. Système selon la revendication 1 caractérisé en ce qu'il comprend deux vis (35) coopérant avec deux trous taraudés (34) dans l'extrémité fermée (25) du boîtier cylindrique (21), la tête (36) desdites vis (35) affleurant la zone avant du palier de la pompe.

8. Système selon la revendication 3 caractérisé en ce qu'il comporte un moyen d'étanchéité entre la chemise intérieure (10) et le boîtier extérieur (21).

9. Système selon la revendication 8 caractérisé en ce que le moyen d'étanchéité consiste en une membrane (42) qui est bloquée par une bague lanterne (44) dans un évidement annulaire (43) pratiqué dans la partie arrière du boîtier extérieur (21) et alimenté en fluide.

## Claims

1. Sealing system including auxiliary relief wheels and which is intended for a centrifugal pump with a pump casing (2) delimiting an interior space in which there is placed an impeller (3) driven in rotation about an axis (7) by a shaft (4), the said impeller (3) including on its front face, that is to say the one pointing towards the suction side of the product to be pumped, vanes (5) which duct the said product towards the periphery of the impeller (3) and towards a delivery pipeline (8), characterized in that the relief wheels (14) rotating in relief chambers, the said wheels and the said chambers are included within an interchangeable cartridge (9) which is mounted in a housing made in the rear port (37) of the pump casing (2) and in that the said interchangeable cartridge includes an element (10) which is integral with the auxiliary relief wheels (14) and can be fitted onto the shaft and comes complete with a means for securing it to the shaft (4) of the pump.

2. System according to Claim 1, characterized in that it includes at least four and preferably six auxiliary relief wheels (14) of diameter very much smaller than that of the impeller.

3. System according to one of Claims 1 and 2, characterized in that the element secured to the auxiliary relief wheels (14) consists in an interior cylindrical sleeve (10) and in that the said system includes:
a. n auxiliary relief wheels (14) radially secured to the internal sleeve (10);
b. an external cylindrical case (21) open at its first end intended to face the rear of the impeller (3) and closed at its second end in a leaktight manner onto the internal sleeve (10);
c. n - 1 separation flanges (16) which are fixed to the inside of the case, each flange being placed in the space between two successive auxiliary relief wheels (14) so as to form an independent chamber.

4. System according to Claim 3,characterized in that the internal sleeve (10) includes a shoulder (11) towards its second end (12), this forming a limit stop for the auxiliary relief wheels (14) which are screw-mounted onto the said sleeve (10).

5. System according to Claim 3, characterized in that each separation flange (16) includes a radial part (17) acting as a separation partition between two successive wheels (14) and a longitudinal part (18) of annular shape, the front and rear edges of which act as bearing surfaces when the cartridge (9) is being fitted.

6. System according to one of Claims 1 and 3, characterized in that the means for securing onto the shaft of the pump consists of a key designed to be placed in a housing consisting of two recesses (32, 33) formed facing one another in the element (10) secured to the auxiliary relief wheels (14) and in the shaft (4).

7. System according to Claim 1, characterized in that it comprises two screws (35) interacting with two tapped holes (34) in the closed end (25) of the cylindrical case (21), the head (36) of the said screws (35) being flush with the front end of the bearing of the pump.

8. System according to Claim 3, characterized in that it includes a sealing means between the internal sleeve (10) and the external case (21).

9. System according to Claim 8, characterized in that the sealing means consist of a diaphragm (42) which is immobilized by a lantern (44) in an annular recess (43) made in the rear part of the outer case (21) and supplied with fluid.

## Patentansprüche

1. Dichtungssystem mit Entlastungs-Hilfsrädern und bestimmt für eine Kreiselpumpe mit einem Pumpengehäuse (2), das einen Innenraum umgrenzt, in dem ein Impulsgeber (3) angeordnet ist, der durch eine Welle (4) rund um eine Achse (7) drehangetrieben ist, wobei der genannte Impulsgeber (3) auf seiner vorderen Stirnseite, daß heißt der, die der Saugseite für das zu pumpende Erzeugnis entgegengewandt ist, Schaufeln (5) aufweist, die das genannte Erzeugnis zum Umfang des Impulsgebers (3) und zu einem Förderleitungssystem (8) lenken, dadurch gekennzeichnet, daß sich die Entlastungsräder (14) in Entlastungskammern drehen, wobei die genannten Räder und die genannten Kammern in einer auswechselbaren Kartusche (9) angeordnet sind, die in einer Aufnahme angebracht ist, die in den hinteren Teil (37) des Pumpengehäuses (2) eingebracht ist, und daß die genannte, auswechselbare Kartusche ein fest mit den Entlastungs-Hilfsrädern (14) verbundenes Element (10) aufweist, das anpaßbar auf der Welle sitzt und mit einem Mittel zur festen Verbindung mit der Welle (4) der Pumpe versehen ist.

2. System nach Anspruch 1, dadurch gekennzeichnet, daß es mindestens vier und bevorzugt sechs Entlastungs-Hilfsräder (14) mit einem Durchmesser aufweist, der viel kleiner ist als der des Impulsgebers.

3. System nach einem der Ansprüche 1 oder 2, dadurch gekennzeichnet, daß das fest mit den Entlastungs-Hilfsrädern (14) verbundene Element aus einem inneren, zylindrischen Stutzen (10) besteht, und daß das genannte System folgendes aufweist:
a. n Entlastungs-Hilfsräder (14), die radial fest mit dem inneren Stutzen (10) verbunden sind;
b. ein außenliegendes, zylindrisches Gehäuse (21), das an seinem ersten Ende offen ist, das dazu bestimmt ist, der Rückseite des Impulsgebers (3) gegenüberzuliegen, und an seinem Zweiten Ende dicht auf dem inneren Stutzen (10) geschlossen ist;
c. n-1 Trennflansche (16), die im Inneren des Gehäuses befestigt sind, wobei jeder Flansch im Zwischenraum zwischen zwei aufeinanderfolgenden Entlastungs-Hilfsrädern (14) derart angeordnet ist, daß eine unabhängige Kammer gebildet ist.

4. System nach Anspruch 3, dadurch gekennzeichnet, daß der innere Stutzen (10) zu seinem zweiten Ende (12) hin einen Bund (11) aufweist, der einen Anschlag für die Entlastungs-Hilfsräder (14) bildet, die durch Verschraubung auf dem genannten Stutzen (10) angebracht sind.

5. System nach Anspruch 3, dadurch gekennzeichnet, daß jeder Trennflansch (16) einen Radialteil (17) aufweist, der als Trennwand zwischen zwei aufeinanderfolgenden Rädern (14) dient, und einen ringförmigen Längsteil (18), dessen vordere und hintere Ränder als Anschlagfläche beim Zusammenbau der Kartusche (9) dienen.

6. System nach einem der Ansprüche 1 oder 3, dadurch gekennzeichnet, daß das Mittel zur festen Verbindung auf der Pumpenwelle aus einem Keil besteht, der dazu eingerichtet ist, in eine Aufnahme eingesetzt zu werden, die aus zwei Aussparungen (32, 33) besteht, die einander gegenüberliegend in das fest mit den Entlastungs-Hilfsrädern (14) verbundene Element (10) und in die Welle (4) eingebracht sind.

7. System nach Anspruch 1, dadurch gekennzeichnet, daß es zwei Schrauben (35) aufweist, die mit zwei Gewindebohrungen (34) im geschlossenen Ende (25) des zylindrischen Gehäuses (21) zusammenwirken, wobei der Kopf (36) der genannten Schrauben (35) bündig in den vorderen Bereich des Lagers der Pumpe eingelassen ist.

8. System nach Anspruch 3, dadurch gekennzeichnet, daß es ein Dichtungsmittel zwischen dem inneren Stutzen (10) und dem außenliegenden Gehäuse (21) aufweist.

9. System nach Anspruch 8, dadurch gekennzeichnet, daß das Dichtungsmittel aus einer Membran (42) besteht, die durch einen Ringkäfig (44) in einer ringförmigen Aussparung (43) festgeklemmt ist, die in den hinteren Teil des außenliegenden Gehäuses (21) eingebracht ist und strömungsmittelgespeist ist.
